# EUROPEAN PATENT SPECIFICATION

(11) **EP 2 844 078 B1**
(45) Date of publication and mention of the grant of the patent: **18.05.2016**
(21) Application number: 13747963.0
(22) Date of filing: 06.05.2013
(51) Int. Cl.: A23K 20/163, A23K 50/10, A23K 50/30, A23K 50/60

(54) **METHOD OF FEEDING A PIGLET, A LAMB, OR A CALF**
VERFAHREN ZUM FÜTTERN VON SCHWEINEN, LÄMMERN ODER KÄLBERN
PROCÉDÉ D'ALIMENTATION D'UN PORCELET, D'UN AGNEAU OU D'UN VEAU

(30) Priority: 04.05.2012 EP 12003457
(43) Date of publication of application: 11.03.2015
(73) Proprietor: BENEO-Orafti S.A., 4360 Oreye (BE)
(72) Inventor: THURMAN, Karel, B-8530 Harelbeke (BE)
(74) Representative: Koster, Nico
(86) International application number: PCT/EP2013/001328
(87) International publication number: WO 2014/000839

(56) References cited:
- WO-A1-96/37206
- US-A1- 2005 271 788
- MONTAGNE L ET AL: "Effect of diet composition on postweaning colibacillosis in piglets", JOURNAL OF ANIMAL SCIENCE, vol. 82, no. 8, August 2004 (2004-08), page 2364, XP002685557, ISSN: 0021-8812
- VICENTE B ET AL: "The effects of feeding rice in substitution of corn and the degree of starch gelatinization of rice on the digestibility of dietary components and productive performance of young pigs", JOURNAL OF ANIMAL SCIENCE, vol. 86, no. 1, January 2008 (2008-01), pages 119-126, XP002685558, ISSN: 0021-8812

## Description

The invention relates to a method of feeding a piglet, a lamb, or a calf, comprising the step of providing a feed to the piglet, lamb, or calf.

Methods of providing a feed to piglets, lambs, and calves are widely known and practiced. A typical feature of the known feeds is that they contain lactose, often in the form of whey. The purpose of adding lactose is to provide a source of carbohydrates to the piglet, lamb, or calf which can be digested in an optimal fashion; lactose qualifies for this purpose since lactose is part of the mother milk, thus the piglet, lamb, or calf is already routinely digesting lactose when it is weaned.

A disadvantage of the known feeds that rely on lactose is that lactose is a rather expensive ingredient.

It is the objective of the present invention to provide an alternative method of feeding a piglet, lamb, or a calf, reducing the disadvantage of the known method.

The said objective is achieved in that the feed contains at most 5 wt.% lactose and between 1 and 20 wt.% raw rice flour or raw rice starch, whereby the D₉₀ of the raw rice flour or raw rice starch is at most 500 µm.

It is an advantage of the present invention that a feed can be provided to a piglet, lamb, or calf that does not need to rely primarily on lactose as source of digestible carbohydrates. It is a further advantage of the present invention that a negative impact on the growth rate or feed conversion as a result of the reduction or elimination of lactose may be reduced or even avoided.

The method of the invention relates to a method of feeding a piglet, a lamb, or a calf. One major difference between on the one hand mature pigs and on the other hand sheep and cattle is that sheep and cattle are ruminants whereas pigs are not. However, for very young animals this situation is different, primarily in the sense that lambs and calves are not yet ruminating or not yet fully ruminating; thus, the digestive systems of piglets, lambs, and calves are significantly closer to each other than those of pigs, sheep, and cattle. Preferably, therefore, the method of the invention relates to a piglet, a preruminant lamb, or a preruminant calf.

The feed to be provided according to the invention to the piglet, lamb, or calf should contain at most 5 wt.% (on total weight of the feed) lactose. Lactose may be provided as such, or it may be provided in the form of a lactose-containing composition such as for example whey. Preferably, the feed contains at most 4, 3, 2, or even at most 1 or 0.5 wt.% lactose. Most preferably, the feed contains according to the invention essentially no lactose.

As used herein, the terms 'essentially', 'consist(ing) essentially of or 'essentially all' and equivalents have, unless noted otherwise, in relation to a composition or a process the usual meaning that deviations in the composition or process may occur, but only to such an extent that the essential characteristics and effects of the composition or process are not materially affected by such deviations.

The feed to be provided according to the invention to the piglet, lamb, or calf should contain between 1 and 20 wt.% raw rice flour or raw rice starch. As meant herein, the term 'raw' refers to the condition of starch, whether it be as such or as part of flour. In particular, the term raw refers to starch that is uncooked, also referred to as a 'cook-up' starch. As the person skilled in the art knows, unmodified raw starch granules show, when viewed with a microscope under polarized light, a Maltese cross effect. This is in contrast to starches that are not raw starches; these are in particular starches - as such or included in flour - that have been treated or modified with the purpose of displaying solubility or gelatinisation effects in aqueous systems already at low temperatures, i.e. temperatures below the original gel point of the raw starch; such starches are often referred to as pregelatinised or cold-soluble starches. Raw rice flour and raw rice starch are as such known.

According to the invention, the amount of raw rice flour or raw rice starch in the feed should be at least 1 wt.% (on the total of the feed). This has the advantage that the benefits of the invention can be clearly noticeable. More preferably, the amount of raw rice flour or raw rice starch in the feed is at least 2, 3, 4, 5, 6, 7, 8, 9, or 10 wt.%. According to the invention, the amount of raw rice flour or raw rice starch is at most 20 wt.%, preferably at most 19, 18, 17, 16, 15, 14, 13, or 12 wt.%.

The raw rice flour or raw rice starch has according to the invention a D₉₀ of at most 500 µm. As is known, the expression that a collection of particles has a 'D_{α} of β' means that α wt.% of all particles in the collection has a size of at most β. The particle size determination as meant herein is done via sieving.

Without wishing to be bound to theory, it is suspected that on the one hand the choice of small particles - significantly smaller, for example, than rice grains or even broken rice grains - in combination with the small size of typically 2 to 8 µm of individual starch granules in the flour or starch particles causes an enhanced availability of the rice starch in the digestive tract of the piglet, lamb, or calf. It is then contemplated that on the other hand, the raw nature of the starch in the raw rice flour or raw rice starch may prevent an overly rapid digestion, and thus an overly rapid systemic availability of glucose, by the piglet, lamb, or calf. The invention thus may strike a favourable balance between speed of digestion and speed of availability of glucose, thereby enabling the raw rice flour or raw rice starch to take on the role of lactose.

Preferably, the D₉₀ of the raw rice flour or raw rice starch in the invention is at most 450 µm, more preferably at most 400, 350, 300, or even at most 250 µm. The D₉₀ of the raw rice flour or raw rice starch is preferably at least 25, 40, 50, 60, 70, 80, 90, or 100 µm.

The raw rice flour or raw rice starch to be used in the method of the present invention may be prepared from a wide range of rice varieties, including but not limited to Indica and Japonica varieties. In one preferred embodiment, a rice variety is chosen of which the starch has a high amylose content, of preferably at least 10%, more preferably at least 12, 14, 16, 18, or even at least 20%; preferably the amylose content is at most 25 or 30%.

The feed that is provided to a piglet, lamb, or calf according to the invention preferably contains all major types of bulk ingredients, i.e. not only carbohydrates but also lipids and proteins. As used herein, the term lipids includes fatty acids. In a preferred embodiment, the feed contains at least 1 wt.% lipids and at least 1 wt.% proteins beyond any lipids and proteins that may be present in the raw rice flour or rice starch. These lipids and proteins may be provided by including ingredients into the feed that are as such known. The lipids should preferably contain short chain fatty acids and linoleic acid. More preferably, the feed contains at least 2, 3, or even at least 4 wt.% lipids and/or at least 2, 3, or 4 wt% proteins. Preferably, the feed contains at most 25 or 20 wt.% lipids and at most 25 or 20 wt.% proteins. The feed can, and preferably does, contain sources of carbohydrate other than from raw rice starch or raw rice flour having a D₉₀ of at most 500 µm. Such other sources are as such well known; examples of such other sources are wheat, corn, and barley.

In a further preferred embodiment, the feed as used in the method of the present invention is nutritionally essentially complete.

The feed as used in the method of the present invention preferably has a rather high dry matter content; preferably, the dry matter content of the feed is at least 40 or 50 wt.%, more preferably at least 55, 60, 65, 70, 75, 80, or even at least 85 wt.%.

In order to benefit from the method of the invention, it is preferred that at least one third of the feed as provided to a piglet, a lamb, or a calf over a 24-hour period is provided according to the method of the invention; more preferably, at least one half, two thirds, three quarters, or even essentially all of the feed as provided to a piglet, a lamb, or a calf over a 24-hour period is provided according the method of the invention. In a preferred embodiment, the aforementioned providing of the feed according to the invention over a 24-hour period is done during at least 5 days, which may be consecutive or not, between the moment of weaning and 100 days thereafter. In one embodiment, the aforementioned providing of the feed according to the invention over a 24-hour period is done during at least 10, 15, 20, 25, 30, 35, 40, 45, 50, 55, 60, 65, 70, or even 75 or 80 days, which may be consecutive or not, between the moment of weaning and 100 days thereafter. In another embodiment, the aforementioned providing of the feed according to the invention over a 24-hour period is done during at least 5, 10, or 15 days of the first 20 days after weaning.

The feed that is provided to a piglet, a lamb, or a calf during about the first 20 days after weaning is herein referred to as a prestarter feed. It is quite customary for known prestarter feeds to contain a rather high amount of lactose of for example 7 to 10%. In one embodiment of the method of the invention, therefore, the feed is a prestarter feed.

The feed that is provided to a piglet, a lamb, or a calf during a period of about 20 days after the prestarter feed is herein referred to as a starter feed. It is quite customary for known starter feeds to contain a significant amount of lactose of for example 3 to 5%. In one embodiment of the method of the invention, therefore, the feed is a starter feed.

The method of feeding a piglet, a lamb, or a calf is not a method of treating an illness; rather, it is part of the regular feeding of piglets, lambs, or calves that are essentially healthy or at least not in need of a treatment that requires a significant diet modification. As meant herein, a significant diet modification means a modification such that the diet is not intended to be, or not capable of being, nutritionally essentially complete; one example of such a modification is a diet that is prompted by a gastrointestinal condition such as diarrhoea; as is known, diets prompted by diarrhoea typically contain essentially no proteins or lipids. The mere administration of a medicament does not normally constitute a significant diet modification.

When a known method of feeding a piglet, lamb, or calf comprises the step of providing a feed that has a very high lactose content of between 20 and 60 wt.%, preferably at least 20, 25, 30, 35, or even at least 40 wt.% lactose, then in an alternative embodiment of the invention between 10 and 50 wt.% and preferably at least 15, 20, 25, or 30 wt.% of the total amount of lactose in the known feed is replaced with raw rice flour or raw rice starch, whereby the D₉₀ of the raw rice flour or raw rice starch is at most 500 µm. In this alternative embodiment, it is preferred that the feed contains between 2 and 25 wt.% and preferably at least 3, 4, 5, 6, or 7 wt.% of raw rice flour or raw rice starch having a D₉₀ of at most 500 µm.

The invention will be illustrated by means of the following Example, without being limited thereto.

### Example 1; Comparative Experiment A

A trial was conducted with 138 cross-bred piglets, half boars and half sows. The piglets were 21 days old at the start of the trial. The piglets were divided over pens, with 8 to 10 piglets per pen. The piglets were weighed the day before the start of the trial, at age 42 days (thus 21 days into the trial), and at age 67 days (thus 46 days into the trial). The piglets were divided into two groups: a control group and a test group. To the control group (Comparative Experiment A) a standard sequence of a prestarter feed (from age 21 days to age 42 days) and a starter feed (from age 43 days to age 67 days) was provided, both of which contained whey powder. To the test group of Example 1, a sequence of a prestarter feed (from age 21 days to age 42 days) and a starter feed (from age 43 days to age 67 days) according to the invention was provided, wherein the whey powder was fully exchanged with raw rice flour (RemyFlo™ R 200; supplier Beneo Remy) having a D₉₀ of 200 µm.

**Table 1 - Compositions piglet diets**

| Experiment / Example | A | A | 1 | 1 |
|---|---|---|---|---|
| Type | Prestart | Starter | Prestart | Starter |
| | | | | |
| Wheat | 200.00 | 200.00 | 200.00 | 200.00 |
| Corn | 239.70 | 248.10 | 220.15 | 239.40 |
| Barley | 200.00 | 200.00 | 200.00 | 200.00 |
| Soybean meal Hipro | 30.00 | 175.00 | 30.00 | 180.00 |
| Potato protein | 31.00 | - | 31.00 | - |
| Soycomil P(soy protein concentrate) | 50.00 | - | 59.00 | - |
| Fullfat toasted soy beans | 60.00 | 50.00 | 60.00 | 50.00 |
| Sunflower meal | 30.00 | 40.00 | 30.00 | 40.00 |
| Whey powder 'sweet' | 100.00 | 30.00 | - | - |
| RemyFlo R 200 | - | - | 100.00 | 30.00 |
| Soya oil | 25.00 | 21.00 | 30.00 | 23.00 |
| Premix piglets low Cu | 5.00 | 5.00 | 5.00 | 5.00 |
| Limestone | 9.50 | 10.50 | 10.00 | 10.50 |
| Monocalciumphosphate | 9.50 | 8.50 | 12.00 | 9.50 |
| Natuphos 5000G | 0.10 | 0.10 | 0.10 | 0.10 |
| Salt | 4.50 | 5.50 | 6.40 | 6.00 |
| L-lysine HCl | 3.50 | 3.80 | 3.85 | 3.90 |
| DL-methionine | 1.30 | 1.30 | 1.30 | 1.30 |
| L-threonine | 0.60 | 1.00 | 0.85 | 1.10 |
| L-Tryptophan | 0.30 | 0.20 | 0.35 | 0.20 |

The amounts of the ingredients in Table 1 are given in parts per thousand (‰), weight/weight.

The two prestarter diets were iso-energetic and iso-proteic. Similarly, the two starter diets were iso-energetic and iso-proteic too.

In Tables 2 and 3, the results of the trial are given, expressed in the weight gain of the piglets (Table 2) and in their feed intake (Table 3).

**Table 2 - Average daily weight gain**

| | A | 1 |
|---|---|---|
| Average weight gain from day 21 to day 42 (kg/day) | 0.108 | 0.120 |
| Average weight gain from day 43 to day 67 (kg/day) | 0.415 | 0.404 |
| Average weight gain overall (kg/day) | 0.272 | 0.272 |

**Table 3 - Average daily feed intake**

| | A | 1 |
|---|---|---|
| Average feed intake from day 21 to day 42 (kg/day) | 0.228 | 0.236 |
| Average feed intake from day 43 to day 67 (kg/day) | 0.691 | 0.666 |
| Average feed intake overall (kg/day) | 0.475 | 0.475 |

As is clear from the results, the piglets of Example 1 were fully comparable in feed intake and weight gain to the piglets of Comparative Experiment A, showing that raw rice flour of certain particle sizes according to the invention is capable of replacing lactose.

## Claims

1. Method of feeding a piglet, a lamb, or a calf, comprising the step of providing a feed to the piglet, lamb, or calf, whereby the feed contains at most 5 wt.% lactose and between 1 and 20 wt.% raw rice flour or raw rice starch, whereby the D₉₀ of the raw rice flour or raw rice starch is at most 500 µm, and Wherein the piglet, lamb, or calf is essentially healthy or at least not in need of a treatment that requires a significant diet modification.

2. Method according to claim 1, wherein the feed contains at most 1 wt.% lactose.

3. Method according to any one of claim 1 or 2 , wherein the feed contains between 3 and 15 wt.% raw rice flour or raw rice starch.

4. Method according to any one of claims 1 - 3, wherein the starch in the raw rice flour or raw rice starch contains at least 10 wt.% amylose.

5. Method according to any one of claims 1 - 4, wherein the feed contains at least 1 wt.% lipids and at least 1 wt.% proteins beyond any lipids and proteins that may be present in the raw rice flour or rice starch.

6. Method according to any one of claims 1 - 5, wherein the feed is nutritionally essentially complete.

7. Method according to any one of claims 1 - 6, wherein the dry matter content of the feed is at least 50 wt.%.

8. Method according to any one of claims 1 - 7, wherein the feed as provided to the piglet, lamb, or calf according to any one of claims 1 - 4 constitutes at least one third of the total amount of feed as provided to the piglet, lamb, or calf over a 24-hour period.

9. Method according to claim 8, wherein the providing of the feed according to any one of claims 1 - 4 over a 24-hour period is done during at least 5 days, which may be consecutive or not, between the moment of weaning and 100 days thereafter.

10. Method according to claim 9, wherein the providing of the feed is done during at least 20 days, which may be consecutive or not, between the moment of weaning and 100 days thereafter.

11. Method according to any one of claims 1 - 10, wherein the feed is a prestarter feed or a starter feed.

12. Method according to any one of claims 1 - 11, wherein the feed is provided to a piglet, a preruminant lamb, or a preruminant calf.

## Patentansprüche

1. Verfahren zum Füttern eines Ferkels, eines Lamms oder eines Kalbs, umfassend den Schritt des Bereitstellens eines Futters an das Ferkel, Lamm oder Kalb, wobei das Futter höchstens 5 Gew.-% Lactose und zwischen 1 und 20 Gew.-% rohes Reismehl oder rohe Reisstärke enthält, wobei der D₉₀-Wert des rohen Reismehls oder der rohen Reisstärke höchstens 500 µm beträgt und wobei das Ferkel, Lamm oder Kalb im Wesentlichen gesund ist oder wenigstens keinen Bedarf an einer Behandlung, die eine wesentliche Ernährungsveränderung erfordert, aufweist.

2. Verfahren gemäß Anspruch 1, wobei das Futter höchstens 1 Gew.-% Lactose enthält.

3. Verfahren gemäß einem von Anspruch 1 oder 2, wobei das Futter zwischen 3 und 15 Gew.-% rohes Reismehl oder rohe Reisstärke enthält.

4. Verfahren gemäß einem der Ansprüche 1-3, wobei die Stärke in dem rohen Reismehl oder der rohen Reisstärke wenigstens 10 Gew.-% Amylose enthält.

5. Verfahren gemäß einem der Ansprüche 1-4, wobei das Futter wenigstens 1 Gew.-% Lipide und wenigstens 1 Gew.-% Proteine über die Lipide und Proteine hinaus, die in dem rohen Reismehl oder der rohen Reisstärke vorhanden sein können, enthält.

6. Verfahren gemäß einem der Ansprüche 1-5, wobei das Futter ernährungsphysiologisch im Wesentlichen vollständig ist.

7. Verfahren gemäß einem der Ansprüche 1-6, wobei der Trockensubstanzgehalt des Futters wenigstens 50 Gew.-% beträgt.

8. Verfahren gemäß einem der Ansprüche 1-7, wobei das Futter, wie dem Ferkel, Lamm oder Kalb gemäß einem der Ansprüche 1-4 bereitgestellt, wenigstens ein Drittel der Gesamtmenge an Futter bildet, das dem Ferkel, Lamm oder Kalb über einen Zeitraum von 24 Stunden bereitgestellt wird.

9. Verfahren gemäß Anspruch 8, wobei das Bereitstellen des Futters gemäß einem der Ansprüche 1-4 über einen Zeitraum von 24 Stunden während wenigstens 5 Tagen, die aufeinanderfolgend sein können oder auch nicht, zwischen dem Zeitpunkt des Absetzens und 100 Tagen danach durchgeführt wird.

10. Verfahren gemäß Anspruch 9, wobei das Bereitstellen des Futters während wenigstens 20 Tagen, die aufeinanderfolgend sein können oder auch nicht, zwischen dem Zeitpunkt des Absetzens und 100 Tagen danach durchgeführt wird.

11. Verfahren gemäß einem der Ansprüche 1-10, wobei das Futter ein Vorstarterfutter oder ein Starterfutter ist.

12. Verfahren gemäß einem der Ansprüche 1-11, wobei das Futter einem Ferkel, einem noch nicht wiederkäuenden Lamm oder einem noch nicht wiederkäuenden Kalb bereitgestellt wird.

## Revendications

1. Méthode destinée à nourrir un porcelet, un agneau ou un veau, comprenant l'étape consistant à fournir un aliment au porcelet, à l'agneau ou au veau, où l'aliment contient au plus 5% en poids de lactose et entre 1 et 20% en poids de farine de riz brute ou d'amidon de riz brut, où la D₉₀ de la farine de riz brute ou de l'amidon de riz brut est d'au plus 500 µm, et où le porcelet, l'agneau ou le veau est essentiellement en bonne santé ou au moins n'a pas besoin d'un traitement qui nécessite une modification significative de régime alimentaire.

2. Méthode selon la revendication 1, dans laquelle l'aliment contient au plus 1% en poids de lactose.

3. Méthode selon l'une quelconque des revendications 1 ou 2, dans laquelle l'aliment contient entre 3 et 15% en poids de farine de riz brute ou d'amidon de riz brut.

4. Méthode selon l'une quelconque des revendications 1-3, dans laquelle l'amidon dans la farine de riz brute ou l'amidon de riz brut contient au moins 10% en poids d'amylose.

5. Méthode selon l'une quelconque des revendications 1-4, dans laquelle l'aliment contient au moins 1% en poids de lipides et au moins 1% en poids de protéines, au-delà de lipides ou protéines quelconques pouvant être présents dans la farine de riz brute ou l'amidon de riz.

6. Méthode selon l'une quelconque des revendications 1-5, dans laquelle l'aliment est essentiellement complet sur le plan nutritionnel.

7. Méthode selon l'une quelconque des revendications 1-6, dans laquelle la teneur en matière sèche de l'aliment est d'au moins 50% en poids.

8. Méthode selon l'une quelconque des revendications 1-7, dans laquelle l'aliment tel que fourni au porcelet, à l'agneau ou au veau selon l'une quelconque des revendications 1-4, constitue au moins un tiers de la quantité totale d'aliment tel que fourni au porcelet, à l'agneau ou au veau sur une période de 24 heures.

9. Méthode selon la revendication 8, dans laquelle l'apport de l'aliment selon l'une quelconque des revendications 1-4 sur une période de 24 heures est effectué pendant au moins 5 jours, qui peuvent être consécutifs ou non, entre le moment du sevrage et 100 jours après.

10. Méthode selon la revendication 9, dans laquelle l'apport de l'aliment est effectué pendant au moins 20 jours, qui peuvent être consécutifs ou non, entre le moment du sevrage et 100 jours après.

11. Méthode selon l'une quelconque des revendications 1-10, dans laquelle l'aliment est un aliment de pré-démarrage ou un aliment de démarrage.

12. Méthode selon l'une quelconque des revendications 1-11, dans laquelle l'aliment est fourni à un porcelet, un agneau pré-ruminant, ou un veau pré-ruminant.
